# EUROPEAN PATENT SPECIFICATION

(11) **EP 3 558 735 B1**
(45) Date of publication and mention of the grant of the patent: **11.08.2021**
(21) Application number: 18795890.5
(22) Date of filing: 10.10.2018
(51) Int. Cl.: B60K 1/04

(54) **CLAMP-BASED FIXATION OF BATTERY MODULE COMPARTMENT COVER**
SPANNBÜGELBASIERTE BEFESTIGUNG DES BATTERIEMODULGEHÄUSEDECKELS
FIXATION DU COUVERCLE DU COMPARTIMENT DU MODULE DE BATTERIE À L'AIDE D'UN SERRE-JOINT

(30) Priority: 12.10.2017 US 201762571775 P; 09.11.2017 US 201715808155
(43) Date of publication of application: 30.10.2019
(73) Proprietor: Tiveni MergeCo, Inc., San Mateo, CA 94402 (US)
(72) Inventor: FEES, Heiner, Santa Clara California 95054 (US); TRACK, Andreas, Santa Clara California 95054 (US); MAISCH, Ralf, Santa Clara California 95054 (US); EICHHORN, Alexander, Santa Clara California 95054 (US)
(74) Representative: ip21 Ltd
(86) International application number: PCT/US2018/055154
(87) International publication number: WO 2019/075017

(56) References cited:
- EP-A1- 2 722 211
- WO-A1-2018/081650
- DE-A1-102012 217 248

## Description

### CROSS-REFERENCE TO RELATED APPLICATIONS

The present Application for Patent claims the benefit of U.S. Provisional Application No. 62/571,775 with attorney docket no. INEV-170001P1, entitled "CLAMP-BASED FIXATION OF A BATTERY MODULE COMPARTMENT COVER", filed October 12, 2017, which is assigned to the assignee hereof.

### BACKGROUND

### 1. Field of the Disclosure

Embodiments relate to clamp-based fixation of a battery module compartment cover.

### 2. Description of the Related Art

Energy storage systems may rely upon batteries for storage of electrical power. For example, in certain conventional electric vehicle (EV) designs (e.g., fully electric vehicles, hybrid electric vehicles, etc.), a battery housing mounted into an electric vehicle houses a plurality of battery cells (e.g., which may be individually mounted into the battery housing, or alternatively may be grouped within respective battery modules that each contain a set of battery cells, with the respective battery modules being mounted into the battery housing). The battery modules in the battery housing are connected in series via busbars to a battery junction box (BJB), and the BJB distributes electric power provided from the busbars to an electric motor that drives the electric vehicle, as well as various other electrical components of the electric vehicle (e.g., a radio, a control console, a vehicle Heating, Ventilation and Air Conditioning (HVAC) system, internal lights, external lights such as head lights and brake lights, etc.). EP2722211A1, WO2018/081650A1, DE102012217248A1 each disclose battery module arrangements.

### SUMMARY

In an embodiment, a battery module arrangement is provided according to claim 1.

### BRIEF DESCRIPTION OF THE DRAWINGS

A more complete appreciation of embodiments of the disclosure will be readily obtained as the same becomes better understood by reference to the following detailed description when considered in connection with the accompanying drawings, which are presented solely for illustration and not limitation of the disclosure, and in which:
FIG. 1 illustrates an isometric front-perspective of an exterior framing of a battery module in accordance with an embodiment of the disclosure.
FIG. 2 depicts the insertion-side cover of the battery module of FIG. 1 being aligned with a battery module compartment in accordance with an embodiment of the disclosure.
FIG. 3 illustrates an electric vehicle that configured with a battery module mounting area configured with battery module compartments that permit lateral insertion of respective battery modules in accordance with an embodiment of the disclosure.
FIG. 4A illustrates an isometric front-perspective of a battery module including an integrated clamp-based insertion-side cover in accordance with an embodiment of the disclosure.
FIG. 4B illustrates the clamp-based insertion-side cover of FIG. 4A in more detail.
FIG. 4C illustrates an isometric rear-perspective of an exterior framing of a battery module of FIG. 4A in accordance with an embodiment of the disclosure.
FIG. 5A illustrates an isometric front-perspective of a U-shaped clamping bar in accordance with an embodiment of the disclosure.
FIG. 5B illustrates a front-perspective and a side-perspective cross-section of the U-shaped clamping bar of FIG. 5A in accordance with an embodiment of the disclosure.
FIG. 5C illustrates an endplate-to-compartment clamping arrangement in accordance with an embodiment of the disclosure.
FIG. 5D illustrates an endplate-to-compartment clamping arrangement in accordance with another embodiment of the disclosure.
FIG. 6A illustrates a front-perspective of a battery module arrangement after insertion of a battery module into a battery module compartment in accordance with an embodiment of the disclosure.
FIG. 6B illustrates a side-perspective cross-section of the battery module arrangement of FIG. 6A in accordance with an embodiment of the disclosure.
FIG. 6C illustrates a side-perspective cross-section of the battery module arrangement 600 of FIG. 6A in accordance with another embodiment of the disclosure.
FIG. 6D illustrates a front-perspective of a battery module arrangement of FIG. 6A in accordance with another embodiment of the disclosure.
FIG. 6E illustrates a side-perspective cross-section of the battery module arrangement of FIG. 6D in accordance with an embodiment of the disclosure.
FIG. 7A illustrates a side-perspective of an endplate-to-compartment clamping arrangement in accordance with another embodiment of the disclosure.
FIG. 7B illustrates a front-perspective of the endplate-to-compartment clamping arrangement of FIG. 7A in accordance with an embodiment of the disclosure.

### DETAILED DESCRIPTION

Embodiments of the disclosure are provided in the following description and related drawings. Alternate embodiments may be devised without departing from the scope of the appended claims. Additionally, well-known elements of the disclosure will not be described in detail or will be omitted so as not to obscure the relevant details of the disclosure.

Energy storage systems may rely upon batteries for storage of electrical power. For example, in certain conventional electric vehicle (EV) designs (e.g., fully electric vehicles, hybrid electric vehicles, etc.), a battery housing mounted into an electric vehicle houses a plurality of battery cells (e.g., which may be individually mounted into the battery housing, or alternatively may be grouped within respective battery modules that each contain a set of battery cells, with the respective battery modules being mounted into the battery housing). The battery modules in the battery housing are connected in series via busbars to a battery junction box (BJB), and the BJB distributes electric power provided from the busbars to an electric motor that drives the electric vehicle, as well as various other electrical components of the electric vehicle (e.g., a radio, a control console, a vehicle Heating, Ventilation and Air Conditioning (HVAC) system, internal lights, external lights such as head lights and brake lights, etc.).

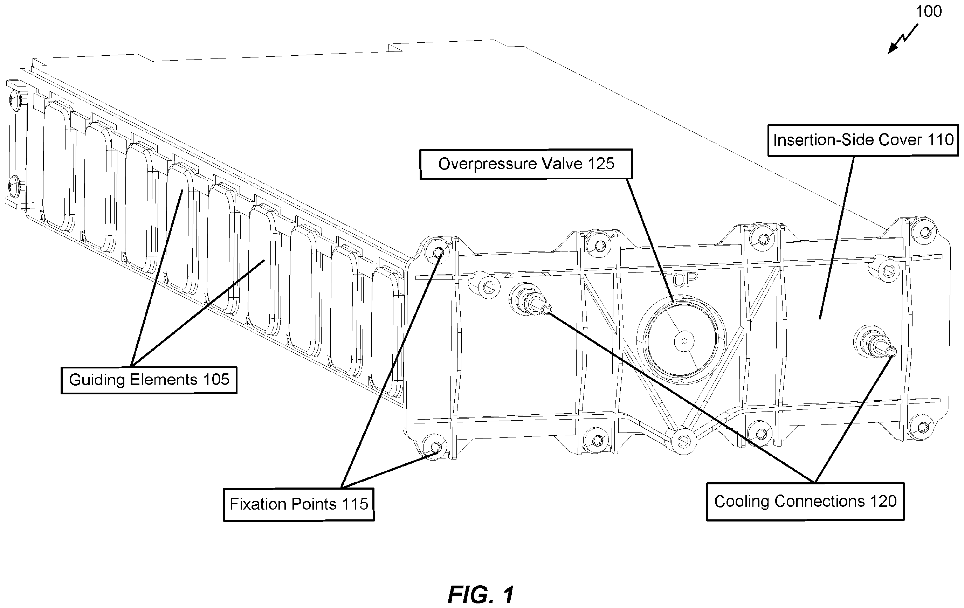

FIG. 1 illustrates an isometric front-perspective of an exterior framing of a battery module 100 in accordance with an embodiment of the disclosure. In the example of FIG. 1, the battery module 100 is configured for insertion into a battery module compartment. For example, in FIG. 1, each side of the battery module 100 includes guiding elements 105 to facilitate insertion into (and/or removal out of) the battery module compartment. In a further example, the guiding elements 105 are configured to fit into grooves inside the battery module compartment to facilitate insertion and/or removal of the battery module 100. An insertion-side cover 110 (or endplate) is integrated into the battery module 100. Upon insertion, the insertion-side cover 110 may be attached or affixed to the battery module compartment (e.g., via fixation points 115, such as bolt-holes, which are provisioned on respective flange sections of the battery module 100) to seal the battery module 100 inside the battery module compartment using a cover (or endplate) integrated sealing system (e.g., rubber ring, paper gasket, sealant adhesive, etc.). While the insertion-side cover 110 is depicted in FIG. 1 as integrated into the battery module 100, the insertion-side cover 110 may alternatively be independent (or separate) from the battery module 100, with the battery module 100 first being inserted into the battery module compartment, after which the insertion-side cover 110 is attached.

Referring to FIG. 1, the insertion-side cover 110 includes fixation points 115 provisioned on respective flange sections (e.g., sections of the battery module that protrude out from the frame of the battery module 100), a set of cooling connections 120, and an overpressure valve 125. In an example, the fixation points 115 may be bolt-holes through which bolts may be inserted, and the set of cooling connections 120 may include input and output cooling tube connectors (e.g., through which coolant fluid is pumped into the battery module 100 for cooling one or more cooling plates). The overpressure valve 125 may be configured to open when pressure inside of the battery module 100 exceeds a threshold (e.g., to avoid an explosion or overpressure by degassing in case of a thermal run away of a battery cell in the battery module 100).

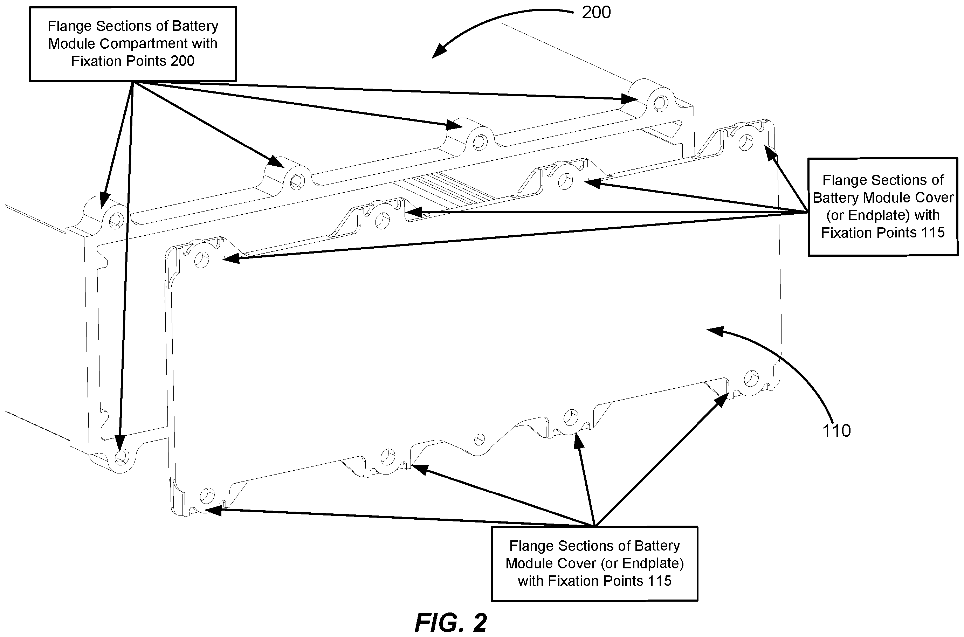

FIG. 2 depicts the insertion-side cover 110 of the battery module 100 being aligned with a battery module compartment 200 in accordance with an embodiment of the disclosure. In particular, the fixation points 115 on the respective flange sections of the battery module 100 are aligned with fixation points 205 on respective flange sections of the battery module compartment 200. So, once the battery module 100 is inserted into the battery module 200, the fixation points 115 and 205 are bolted together to secure (and seal) the battery module 100 inside the battery module compartment 200.

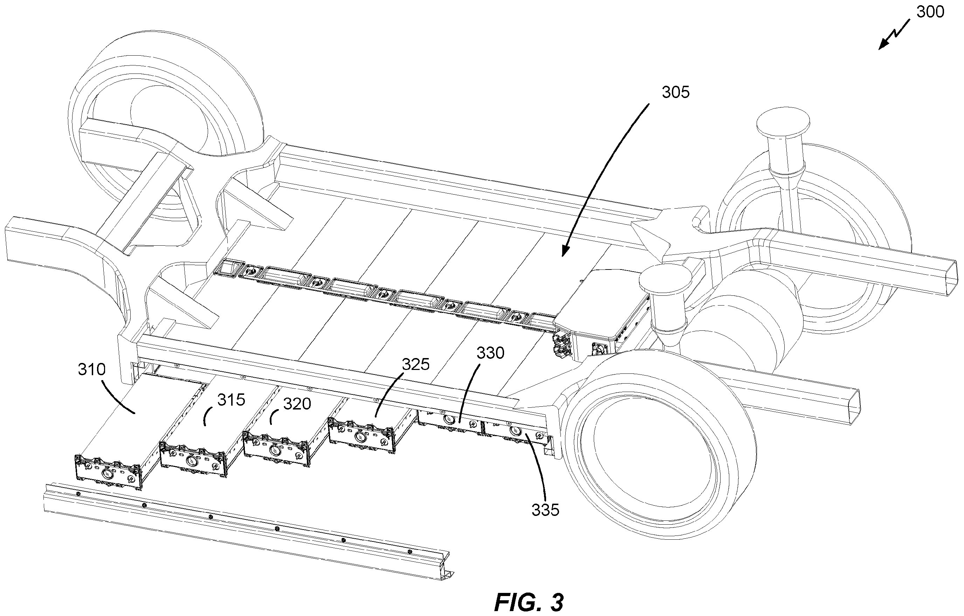

FIG. 3 illustrates an electric vehicle 300 that configured with a battery module mounting area 305 configured with battery module compartments that permit lateral insertion of respective battery modules in accordance with an embodiment of the disclosure. More specifically, battery modules may be inserted into respective battery module compartments on both left and right sides of the electric vehicle 300.

Referring to FIG. 3, the battery module mounting area 305 includes, on a left side of the electric vehicle 300, battery module compartments configured to receive battery modules 310-335 via left-side lateral insertion. In FIG. 3, battery modules 310-325 are shown at different degrees of lateral insertion, while battery modules 330-335 are shown in a fully-inserted state. While not shown explicitly in FIG. 3, the battery module mounting area 305 may further include, on a right side of the electric vehicle 300, battery module compartments configured to receive other battery modules via right-side lateral (or side) insertion. More specifically, the insertion-sides of the battery modules 310-335 correspond to the left exterior-facing lateral side of each respective battery module compartment on the left side (longitudinally) of the electric vehicle 300, and the insertion-sides of the battery modules of each respective battery module compartment on the right side (longitudinally) correspond to the right exterior-facing lateral side of the electric vehicle 300. Each battery module in FIG. 3 is shown as including the insertion-side cover 110 of FIGS. 1-2, which uses fixation points 115 provisioned in flange sections to be secured onto a respective battery module compartment.

Various embodiments of the disclosure described herein relate to reducing a vertical footprint (i.e., a height in a Z direction) of an insertion-side cover that is used to secure (or provide fixation of) of a battery module inside of a battery module compartment. As will be described below, instead of bolting fixation points arranged on flange sections of an insertion-side cover directly to corresponding fixation points arranged on flange sections of the battery module compartment as described above with respect to FIGS. 1-3, fixation points are defined in the insertion-side cover which cause contact pressure to be applied between the an endplate of the battery module and the battery module compartment.

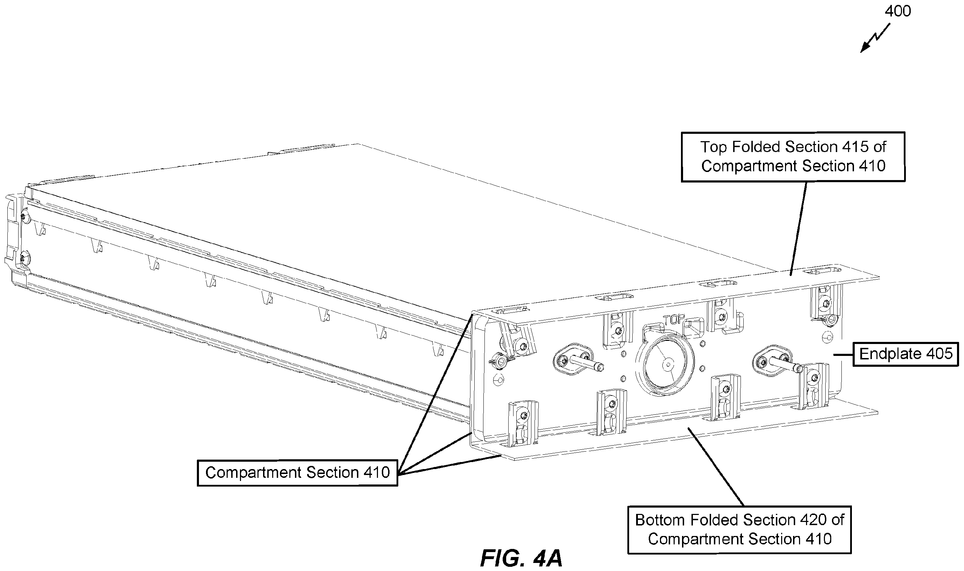

FIG. 4A illustrates an isometric front-perspective of a battery module 400 including an integrated clamp-based insertion-side cover in accordance with an embodiment of the disclosure. Referring to FIG. 4A, the clamp-based insertion-side cover reduces the size of the flange sections and omits the endplate-to-compartment fixation points 115 described above with respect to FIGS. 1-3, and instead includes a plurality of endplate-to-compartment clamping arrangements (described in more detail below). The clamp-based insertion-side cover includes an endplate 405 of the battery module 400, and a compartment section 410. The compartment section 410 is folded so as to include a top folded section 415 and a bottom folded section 420. The top and bottom folded sections 415 and 420 include holes or cutouts inside of which endplate-to-compartment clamping arrangements are arranged.

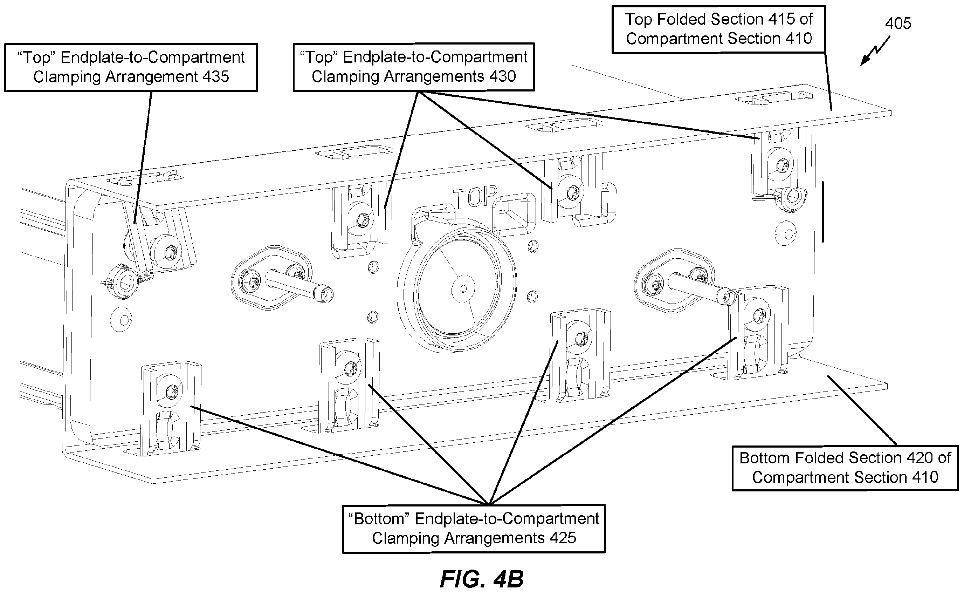

FIG. 4B illustrates the clamp-based insertion-side cover of FIG. 4A in more detail. Referring to FIG. 4B, "bottom" endplate-to-compartment clamping arrangements 425 are arranged inside holes of the bottom folded section 420, and "top" endplate-to-compartment clamping arrangements 430-435 are arranged inside holes of the top folded section 415. The "bottom" endplate-to-compartment clamping arrangements 425 and the "top" endplate-to-compartment clamping arrangements 430 are each shown in a tightened or locked state, while the "top" endplate-to-compartment clamping arrangement 435 is shown in an untightened or loosened state. As will be described in more detail below, tightening of the endplate-to-compartment clamping arrangements functions to secure the battery module 400 inside a respective battery module compartment, while untightening or loosening the endplate-to-compartment clamping arrangements permits removal of the battery module 400 from the respective battery module compartment.

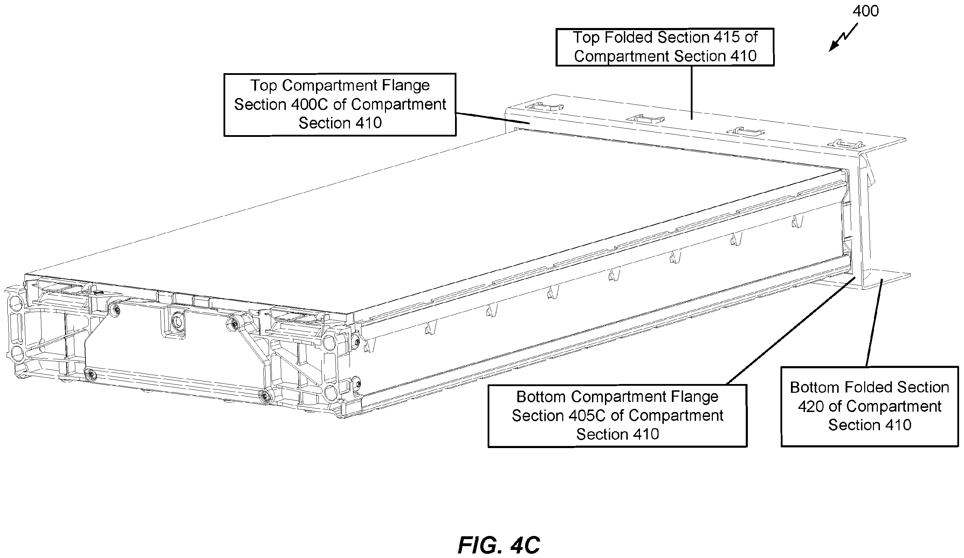

FIG. 4C illustrates an isometric rear-perspective of an exterior framing of a battery module 400 in accordance with an embodiment of the disclosure. Various components of the battery module 400 are depicted in FIG. 4C (e.g., optical LC communications interface, rear endplate fixation recesses for fixation of the battery module 400 inside of a battery module compartment, guiding elements for facilitating on sidewalls of the battery module 400, etc.) but are not labeled or described in detail as such features do not relate specifically to the manner in which the insertion-side cover 405 is secured to the battery module compartment.

Referring to FIG. 4C, top and bottom compartment flange sections 400C and 405C of the compartment section 410 are shown. As will be described below in more detail, the top and bottom compartment flange sections 400C and 405C are contacted by endplate sections of the endplate 405 that receive contact pressure from bulged sections of U-shaped clamping bars of endplate-to-compartment clamping arrangements.

Referring to FIGS. 1-2, the flange sections for the fixation points 115 and 200 extend upwards and downwards from the battery module compartment so as to create a vertical footprint (e.g., 137.95 millimeters (mm)). By contrast, top and bottom compartment flange sections 400C and 405C of the compartment section 410 are each shorter than the flange sections for the fixation points 115 and 200 in FIGS. 1-2, which reduces the vertical footprint required by the battery module 400 (e.g., from 137.95 mm to 106.5 mm). In an example, the top and bottom compartment flange sections 400C and 405C may each have a vertical distance that is approximately 15.5 mm less than the vertical distance required for the flange sections for the fixation points 115 and 200 shown in FIGS. 1-2. This in turn reduces the overall vertical footprint required for the battery housing.

In a further embodiment, the battery housing (and hence, the clamp-based insertion-side cover) may form part of the chassis of an electric vehicle in at least one embodiment, so reducing the vertical footprint of the battery module compartment using the clamp-based insertion-side cover may in turn reduce a vertical footprint (e.g., a height in the Z direction) of the electric vehicle chassis as well.

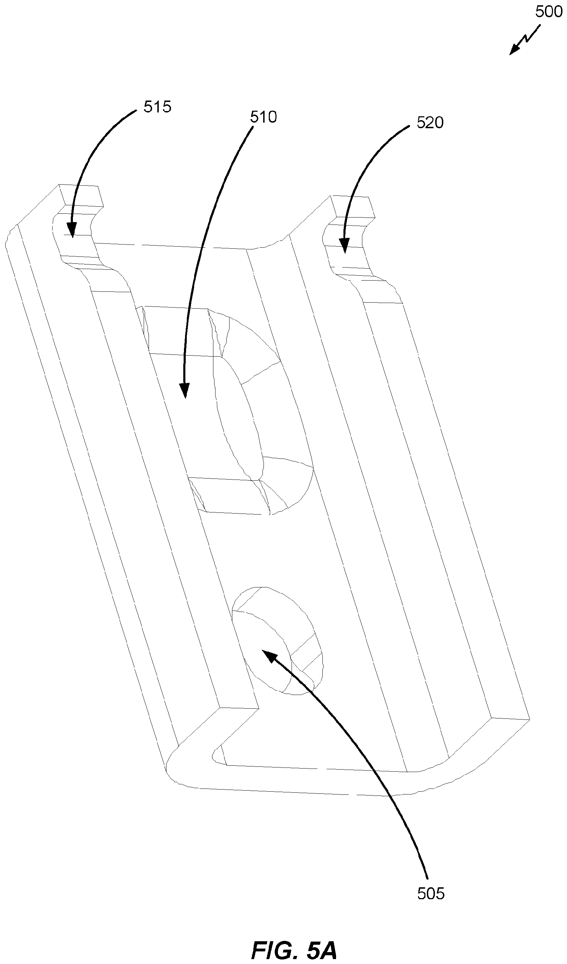

FIG. 5A illustrates an isometric front-perspective of a U-shaped clamping bar 500 in accordance with an embodiment of the disclosure. In particular, the U-shaped clamping bar 500 is folded so as to have to a U-shape, as shown in FIG. 5A. In an example, the U-shaped clamping bar 500 may be made from a metallic material (e.g., steel), and may undergo deformation or plasticization to increase elasticity and to help to ensure that a homogeneous clamping force (or clamping pressure) is applied by equalizing the associated tolerances. The U-shaped clamping bar 500 is a component of the endplate-to-compartment clamping arrangements 425-435 described above with respect to FIG. 4B. The U-shaped clamping bar 500 includes a hole (e.g., a screw hole or bolt hole) 505, a bulged section 510, and grooves 515 and 520. The grooves 515 and 520 are arranged at opposite ends of the U-shape of the U-shaped clamping bar 500, as shown in FIG. 5A (e.g., at the same vertical level, such that both grooves 515-520 are aligned with the top folded section when a screw inside of the hole 505 is tightened).

In an example, the "U-shape" of the U-shaped clamping bar 500 may help to protect against the U-shaped clamping bar 500 from falling off the battery module 400 altogether, while still permitting flexibility of movement while in a loosened state. However, it will be appreciated that other shapes could also accomplish this objective (e.g., a semi-circle, a set of 3 joined bars that meet at right angles for a more rectangular shape, etc.). Accordingly, the "U-shape" of the U-shaped clamping bar 500 is merely representative of one particular embodiment, and is not intended to limit clamping bars in all embodiments to a "U-shape" implementation.

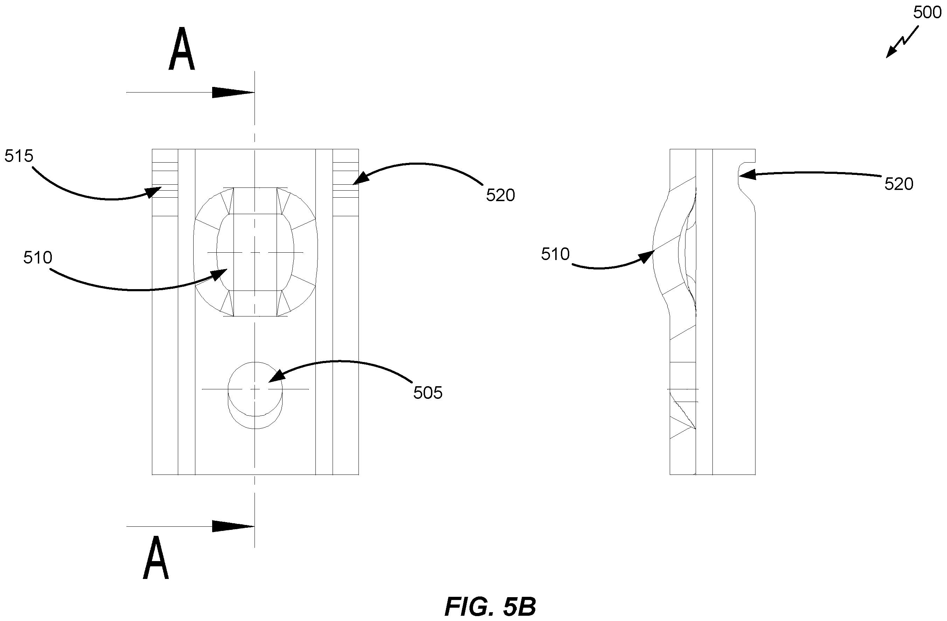

FIG. 5B illustrates a front-perspective and a side-perspective cross-section (taken along the A-A line noted in the front-perspective) of the U-shaped clamping bar 500 in accordance with an embodiment of the disclosure.

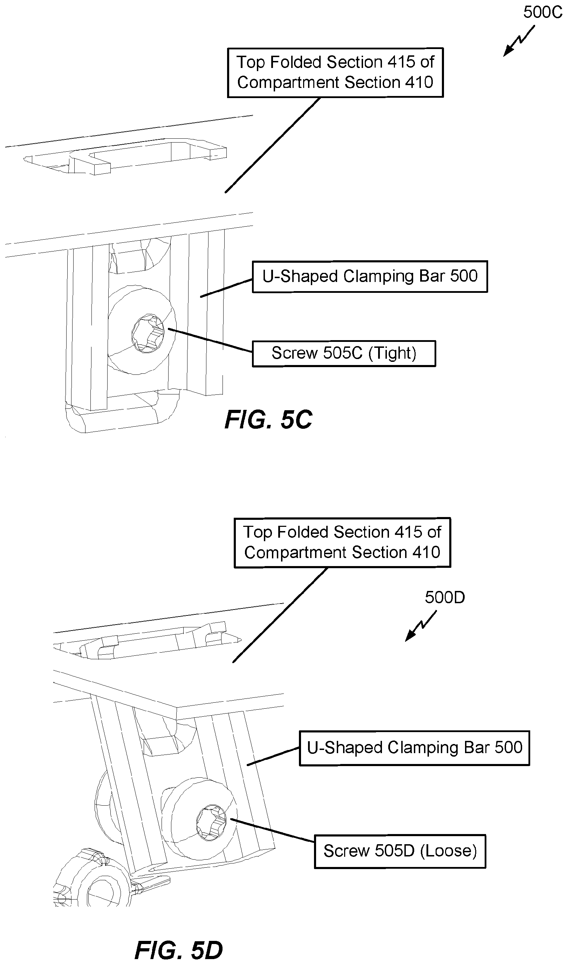

FIG. 5C illustrates an endplate-to-compartment clamping arrangement 500C in accordance with an embodiment of the disclosure. In particular, the endplate-to-compartment clamping arrangement 500C corresponds to one of the "top" endplate-to-compartment clamping arrangement 430 from FIG. 4B. In FIG. 5C, a screw 505C is tightened inside a fixation point in the endplate 405 that is aligned with the hole 505 of the U-shaped clamping bar 500. As the screw 505C is tightened, the bulged section 510 acts as a fulcrum over which the U-shaped clamping bar 500 "rolls" or pivots, which causes the grooves 515 and 520 to move away from the endplate 405 until the grooves 515 and 520 catch, and lock into, the top folded section 415. As will be appreciated, the grooves 515 and 520 are aligned with the top folded section 415 to facilitate the above-noted locking function. When locked in this manner, the top folded section 415 braces the U-shaped clamping bar 500 against further backward movement by supporting the reaction force in response to the clamping.

As the screw 505C continues to tighten, the bulged section 510 is pushed against the endplate 405 (e.g., while the grooves 515 and 520 are locked onto and braced by the top folded section 415), creating contact pressure that is applied to the top compartment flange section 400C shown in FIG. 4C (e.g., via an intervening endplate section in the insertion-side cover 405). This contact pressure functions to secure the endplate 405 (and hence, the entire battery module 400) to the compartment section 410 of the battery module compartment. In an example, the U-shaped clamping bar 500 may be configured to become deformed as contact pressure is increased (e.g., as the screw 505C is tightened). Moreover, as will be described in more detail below, the contact pressure between the endplate 405 and the compartment section 410 is configured to form a sealed connection.

FIG. 5D illustrates an endplate-to-compartment clamping arrangement 500D in accordance with an embodiment of the disclosure. In particular, the endplate-to-compartment clamping arrangement 500D corresponds to the "top" endplate-to-compartment clamping arrangement 435 from FIG. 4B. In FIG. 5D, a screw 505D is loosened inside a fixation point of the endplate 405 that is aligned with the hole 505 of the U-shaped clamping bar 500. As the screw 505D is loosened, the contact pressure from the bulged section 510 to the top compartment flange section 400C is reduced, such that the battery module 400 is no longer secured inside the battery module compartment and can be removed. In particular, the U-shaped clamping bar 500 is unlocked from the top folded section 415, after which the battery module 400 can be removed from the battery module compartment.

Referring to FIG. 5D, the screw 505D may be configured to remain in the U-shaped clamping bar 500 even in a loosened state. In this case, while being loosened, the screw 505D will reach a point at which the screw 505D cannot be further loosened, such that the screw 505D cannot be removed from the U-shaped clamping bar 500. Alternatively, the screw 505D may be configured to be removable from the U-shaped clamping bar 500 if the loosening of the screw 505D exceeds a threshold.

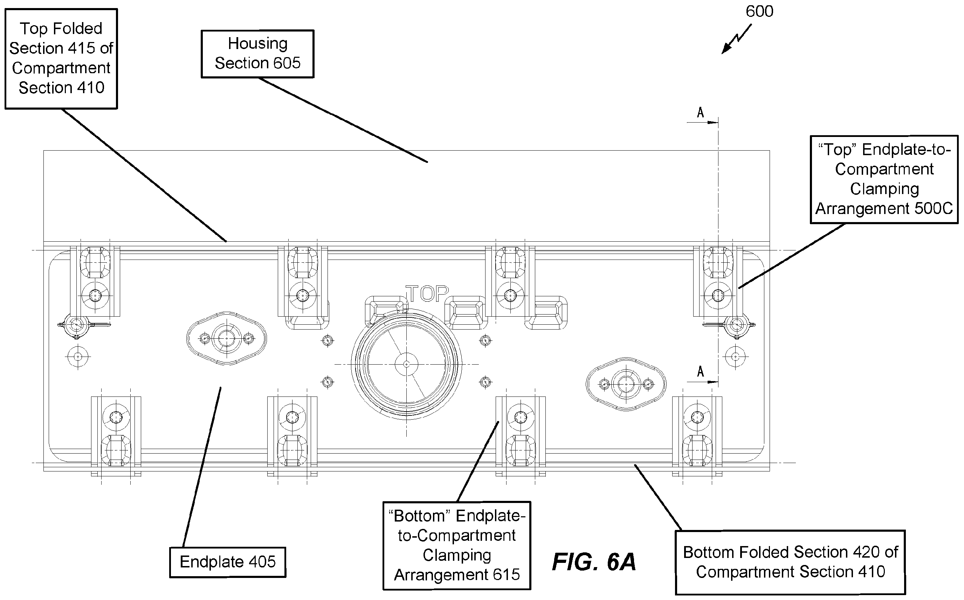

FIG. 6A illustrates a front-perspective of a battery module arrangement 600 after insertion of the battery module 400 into a battery module compartment in accordance with an embodiment of the disclosure.

Referring to FIG. 6A, a housing section 605 is arranged over the battery module 400. In an example, the top folded section 415 of the compartment section 410 contacts an underside of the housing section 605. A plurality of "top" endplate-to-compartment clamping arrangements 500C are shown, as well as a plurality of "bottom" endplate-to-compartment clamping arrangements 610. The "bottom" endplate-to-compartment clamping arrangements 610 are essentially inverted (e.g., upside-down) versions of the "top" endplate-to-compartment clamping arrangements 500C. In an example, while not shown expressly in FIG. 6A, the bottom folded section 420 of the compartment section 410 may contact a top-side of another housing section (not shown) arranged beneath the battery module 400.

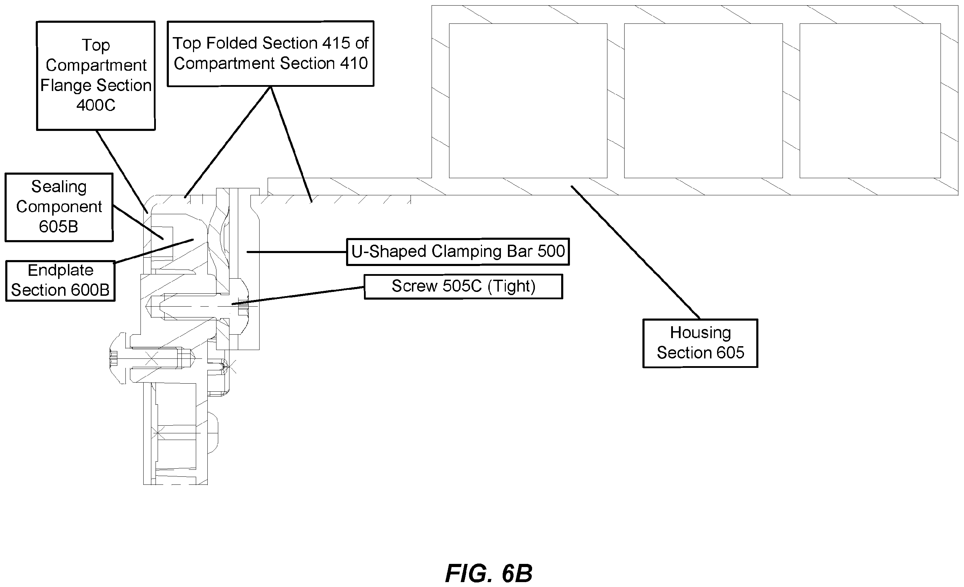

FIG. 6B illustrates a side-perspective cross-section (taken along the A-A line noted in the front-perspective of FIG. 6A) of the battery module arrangement 600 of FIG. 6A in accordance with an embodiment of the disclosure. In FIG. 6B, a "top" endplate-to-compartment clamping arrangement 500C is shown in a tightened state, whereby endplate section 600B receives contact pressure from the bulged section 610 of the U-shaped clamping bar 500. This contact pressure is transferred to the top compartment flange section 400C, which functions to secure the endplate 405 to the compartment section 410. Moreover, a sealing component 605B (e.g., a rubber gasket, etc.) is arranged inside of the endplate section 600B. So, the contact pressure pressing upon the sealing component 605B between the endplate section 600B and the top compartment flange section 400C functions to seal the battery module compartment.

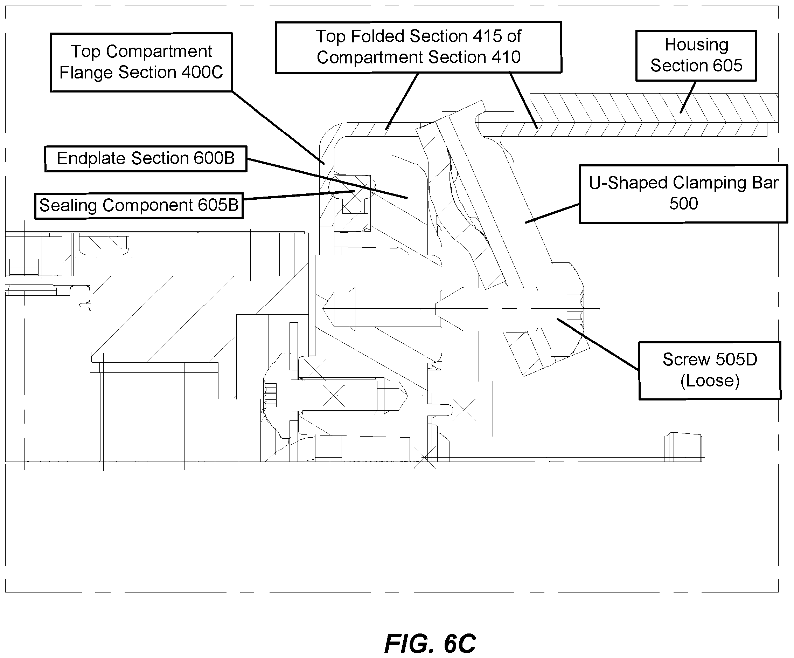

FIG. 6C illustrates a side-perspective cross-section of the battery module arrangement 600 of FIG. 6A in accordance with another embodiment of the disclosure. In FIG. 6C, the "top" endplate-to-compartment clamping arrangement 500C is shown in a loosened state, whereby endplate section 600B does not receive contact pressure from the bulged section 610 of the U-shaped clamping bar 500.

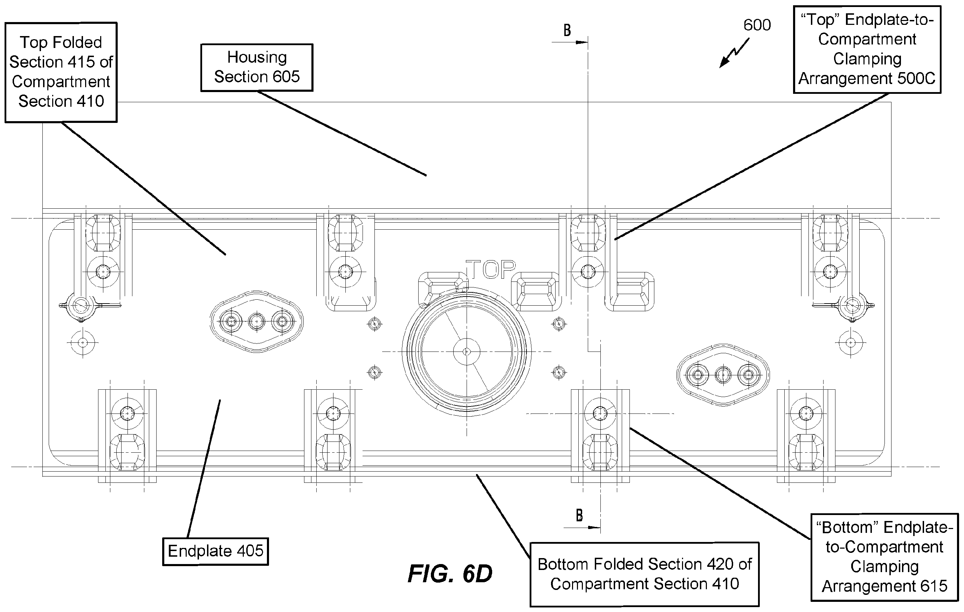

FIG. 6D illustrates a front-perspective of the battery module arrangement 600 of FIG. 6A in accordance with another embodiment of the disclosure. FIG. 6D is identical to FIG. 6C, except that a B-B line is marked across both "top" and "bottom" endplate-to-compartment clamping arrangements.

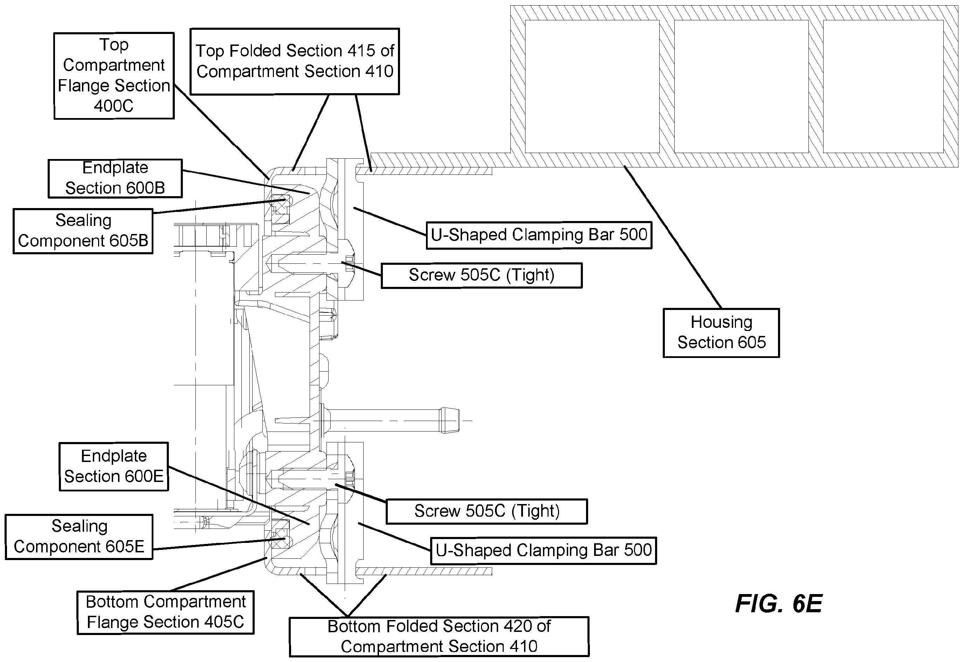

FIG. 6E illustrates a side-perspective cross-section (taken along the B-B line noted in the front-perspective of FIG. 6D) of the battery module arrangement 600 of FIG. 6D in accordance with an embodiment of the disclosure. In FIG. 6D, "top" and "bottom" endplate-to-compartment clamping arrangements 500C and 615 are shown in a tightened state, whereby endplate sections 600B and 600E each receive contact pressure from the bulged sections 610 of the U-shaped clamping bars 500 of the "top" and "bottom" endplate-to-compartment clamping arrangements 500C and 615, respectively. This contact pressure presses upon the sealing components 605B and 605E, respectively. In an example, the sealing components 605B and 605E may be part of one continuous seal (e.g., a rubber gasket, etc.) that runs around the endplate 405. While not shown expressly in FIG. 6E, the bottom folded section 420 of the compartment section 405 may contact a top-side of another housing section (not shown) arranged beneath the battery module 400.

In a further embodiment, the bulged section 510 of the U-shaped clamping bar 500 may be aligned with a concave section of a respective endplate section, resulting in lower contact pressure in the contact zone. In an alternative embodiment, the bulged section 510 of the U-shaped clamping bar 500 may be aligned with a flat section of a respective endplate section, resulting in higher contact pressure in the contact zone. In an alternative embodiment, the bulged section 510 of the U-shaped clamping bar 500 may be aligned with a convex section of a respective endplate section, resulting in lower contact pressure in the contact zone. Accordingly, a shape of a portion of the endplate section that contacts the bulged section 510 of the U-shaped clamping bar 500 can be controlled so as to regulate an amount of contact pressure applied thereto.

While some embodiments have been described above with respect to "top" endplate-to-compartment clamping arrangements, these descriptions also apply to "bottom" endplate-to-compartment clamping arrangements. In particular, in various embodiments, the "top" and "bottom" endplate-to-compartment clamping arrangements are arranged as mirror images of each other.

Further, while the grooves 515-520 of the U-shaped clamping bar 500 are arranged inside holes or cutouts of the top and bottom folded sections 415 and 420 in the above-described embodiments, in alternative embodiments the grooves 515-520 could instead be configured to lock onto a separate groove-locking component. For example, groove-locking components such as a metal bands may be arranged on the top and bottom folded sections 415 and 420, with the grooves 515-520 being configured to lock onto respective edges of these groove-locking components instead of being locked directly onto the top and bottom folded sections 415 and 420 inside respective holes or cutouts as described above. In this case, the holes or cutouts need not be made part of the top and bottom folded sections 415 and 420 at all.

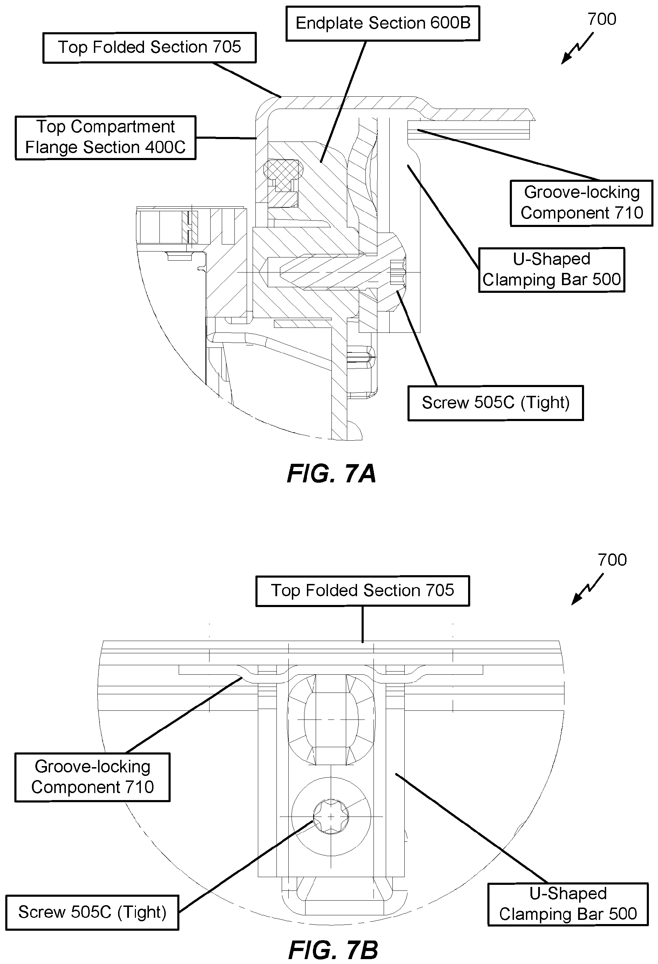

FIG. 7A illustrates a side-perspective of an endplate-to-compartment clamping arrangement 700 in accordance with another embodiment of the disclosure. FIG. 7B illustrates a front-perspective of the endplate-to-compartment clamping arrangement 700 in accordance with an embodiment of the disclosure.

Referring to FIGS. 7A-7B, the compartment section 410 is configured with a top folded section 705 that does not include the holes or cutouts shown in the top folded section 415 of FIGS. 4A-4C. Instead, a groove-locking component 710 mounted onto the top folded section 705, and the grooves 515-520 of the U-shaped clamping bar 500 lock onto the groove-locking component 710. In an example, the groove-locking component 710 may be configured as a metal band that is spot welded onto the top folded section 705. While FIGS. 7A-7B are described with respect to the top folded section 705, it will be appreciated that the bottom folded section may be configured similarly (e.g., with groove-locking components mounted onto the top folded section instead of holes or cutouts arranged to catch the grooves 515-520 of the U-shaped clamping bars).

While the embodiments described above relate primarily to land-based electric vehicles (e.g., cars, trucks, etc.), it will be appreciated that other embodiments can deploy the various battery-related embodiments with respect to any type of electric vehicle (e.g., boats, submarines, airplanes, helicopters, drones, spaceships, space shuttles, rockets, etc.).

While the embodiments described above relate primarily to battery module compartments and associated battery modules and insertion-side covers for deployment as part of an energy storage system for an electric vehicle, it will be appreciated that other embodiments can deploy the various battery-related embodiments with respect to any type of energy storage system. For example, besides electric vehicles, the above-noted embodiments can be applied to energy storage systems such as home energy storage systems (e.g., providing power storage for a home power system), industrial or commercial energy storage systems (e.g., providing power storage for a commercial or industrial power system), a grid energy storage system (e.g., providing power storage for a public power system, or power grid) and so on.

As will be appreciated, the placement of the various battery module compartments in the above-noted embodiments is described as being integrated into a vehicle floor of an electric vehicle. However, it will be appreciated that the general closed compartment profile design may be extended to battery module mounting areas that can be installed in other locations within the electric vehicle (e.g., in a trunk of the electric vehicle, behind one or more car seats, under a front-hood of the electric vehicle, etc.).

## Claims

1. A battery module arrangement configured for deployment with respect to a battery module compartment within a battery module mounting area of an energy storage system, comprising:
a battery module (400) configured to be inserted into and/or removed from an interior space of the battery module compartment via an insertion-side of the battery module compartment;
a clamp-based insertion-side cover configured to be closed over the insertion-side of the battery module compartment,
wherein the clamp-based insertion-side cover includes:
an endplate (405; 600B; 600E) of the battery module,
a compartment section (410) of the battery module compartment, and
a plurality of endplate-to-compartment clamping arrangements (425; 430; 435; 615; 500C) that are integrated as part of the clamp-based insertion-side cover and are configured to secure the battery module inside of the battery module compartment by clamping the endplate to the compartment section, **characterized in that**:
wherein each of the plurality of endplate-to-compartment clamping arrangements (425; 430; 435; 615; 500C) includes a screw (505C; 505D), a clamping bar (500), and an endplate section (600B; 600E),
wherein the screw (505C; 505D), is configured to be inserted through a hole (505) in the clamping bar (500) and into a fixation point on the endplate (405; 600B; 600E) which causes contact pressure to be applied by the clamping bar (500) to the compartment section (410) in a direction that is different from an insertion direction of the screw (505C; 505D) into the hole.

2. The battery module arrangement of claim 1,
wherein the clamping bar in each of the plurality of endplate-to-compartment clamping arrangements (425; 430; 435; 615; 500C) includes a set of grooves, and
wherein each of the plurality of endplate-to-compartment clamping arrangements (425; 430; 435; 615; 500C) further includes a folded section of a compartment section.

3. The battery module arrangement of claim 2, wherein the clamping bar includes a bulged section that, in response to the screw being tightened, is configured to apply the applied contact pressure to the endplate section that clamps the endplate section to a flange section of the compartment section.

4. The battery module arrangement of claim 3, wherein a shape of a portion of the endplate section that contacts the bulged section of the clamping bar is configured to regulate the applied contact pressure.

5. The battery module arrangement of claim 4, wherein the shape is convex, concave or flat.

6. The battery module arrangement of claim 3, further comprising:
a sealing component arranged between the endplate section and the flange section,
wherein the applied contact pressure presses upon the sealing component to seal the battery module compartment.

7. The battery module arrangement of claim 2, wherein, in response to the screw being tightened, the set of grooves contact and lock onto an edge of a hole that is defined in the folded section to brace the clamping bar against backward movement.

8. The battery module arrangement of claim 2, wherein, in response to the screw being tightened, the set of grooves contact and lock onto an edge of a groove-locking component that is attached to the folded section to brace the clamping bar against backward movement.

9. The battery module arrangement of claim 2,
wherein the clamping bar is configured as a U-shaped clamping bar, and
wherein the set of grooves include two grooves that are arranged at opposite ends of a U-shape of the U-shaped clamping bar.

10. The battery module arrangement of claim 2, wherein the clamping bar is constructed from a metallic material that undergoes deformation or plasticization to increase elasticity in order to ensure a homogeneous clamping force.

11. The battery module arrangement of claim 1, wherein the plurality of endplate-to-compartment clamping arrangements includes a first set of endplate-to-compartment clamping arrangements arranged along a first edge of the clamp-based insertion-side cover and a second set of endplate-to-compartment clamping arrangements arranged along a second edge of the clamp-based insertion-side cover, the first and second edges being opposing edges of the clamp-based insertion-side cover.

## Patentansprüche

1. Eine Batteriemodulanordnung, die für den Einsatz in Bezug auf ein Batteriemodulfach innerhalb eines Batteriemodulmontagebereichs eines Energiespeichersystems konfiguriert ist, umfassend:
ein Batteriemodul (400), das so konfiguriert ist, dass es über eine Einschubseite des Batteriemodulfachs in einen Innenraum des Batteriemodulfachs eingesetzt und/oder aus diesem entfernt werden kann;
eine klemmenbasierte einschubseitige Abdeckung, die so konfiguriert ist, dass sie über der Einschubseite des Batteriemodulfachs geschlossen wird,
wobei die klemmenbasierte einschubseitige Abdeckung umfasst:
eine Endplatte (405; 600B; 600E) des Batteriemoduls,
einem Fachabschnitt (410) des Batteriemodulfachs, und
eine Mehrzahl von Endplatten-zu-Fach-Klemmanordnungen (425; 430; 435; 615; 500C), die als Teil der klemmenbasierten einschubseitigen Abdeckung integriert sind und konfiguriert sind, um das Batteriemodul innerhalb des Batteriemodulfachs durch Klemmen der Endplatte an den Fachabschnitt zu sichern, **dadurch gekennzeichnet, dass**:
wobei jede der Mehrzahl von Endplatten-zu-Fach-Klemmanordnungen (425; 430; 435; 615; 500C) umfasst eine Schraube (505C; 505D), eine Klemmleiste (500) und einen Endplattenabschnitt (600B; 600E),
wobei die Schraube (505C; 505D) so konfiguriert ist, dass sie durch ein Loch (505) in der Klemmleiste (500) und in einen Fixierungspunkt an der Endplatte (405; 600B; 600E) eingeführt wird, was bewirkt, dass durch die Klemmleiste (500) ein Kontaktdruck auf den Fachabschnitt (410) in einer Richtung ausgeübt wird, die sich von einer Einschubrichtung der Schraube (505C; 505D) in das Loch unterscheidet.

2. Batteriemodulanordnung nach Anspruch 1,
wobei die Klemmleiste in jeder der Mehrzahl von Endplatten-zu-Fach Klemmanordnungen (425; 430; 435; 615; 500C) umfasst einen Satz von Nuten, und
wobei jede der Mehrzahl von Endplatten-zu-Fach-Klemmanordnungen (425; 430; 435; 615; 500C) ferner einen gefalteten Abschnitt eines Fachabschnitts aufweist.

3. Batteriemodulanordnung nach Anspruch 2, wobei die Klemmleiste einen gewölbten Abschnitt aufweist, der als Reaktion auf das Anziehen der Schraube so konfiguriert ist, dass er den angelegten Kontaktdruck auf den Endplattenabschnitt ausübt, der den Endplattenabschnitt an einen Flanschabschnitt des Fachabschnitts klemmt.

4. Batteriemodulanordnung nach Anspruch 3, wobei eine Form eines Abschnitts des Endplattenabschnitts, der den gewölbten Abschnitt der Klemmleiste berührt, konfiguriert ist, um den angelegten Kontaktdruck zu regulieren.

5. Batteriemodulanordnung nach Anspruch 4, wobei die Form konvex, konkav oder flach ist.

6. Batteriemodulanordnung nach Anspruch 3, die ferner umfasst:
ein Dichtungselement, das zwischen dem Endplattenabschnitt und dem Flanschabschnitt angeordnet ist,
wobei der angelegte Kontaktdruck auf die Dichtungskomponente drückt, um das Batteriemodulfach abzudichten.

7. Batteriemodulanordnung nach Anspruch 2, wobei als Reaktion auf das Anziehen der Schraube der Satz von Nuten einen Rand eines Lochs berührt und einrastet, das im gefalteten Abschnitt definiert, um die Klemmleiste gegen Rückwärtsbewegung abzustützen.

8. Batteriemodulanordnung nach Anspruch 2, wobei als Reaktion auf das Anziehen der Schraube der Satz von Nuten einen Rand einer Nutverriegelungskomponente berührt und einrastet, die an dem gefalteten Abschnitt angebracht ist, um die Klemmleiste gegen Rückwärtsbewegung abzustützen.

9. Batteriemodulanordnung nach Anspruch 2,
wobei die Klemmleiste als U-förmige Klemmleiste konfiguriert ist, und
wobei der Satz von Nuten zwei Nuten umfasst, die an gegenüberliegenden Enden angeordnet sind einer U-Form der U-förmigen Klemmleiste.

10. Batteriemodulanordnung nach Anspruch 2, wobei die Klemmleiste aus einem metallischen Werkstoff gefertig ist, der zur Erhöhung der Elastizität einer Verformung oder Plastifizierung unterzogen wird, um eine homogene Klemmkraft zu gewährleisten.

11. Batteriemodulanordnung nach Anspruch 1, wobei die Mehrzahl von Endplatten-zu-Fach-Klemmanordnungen einen ersten Satz von Endplatten-zu-Fach-Klemmanordnungen umfasst, die eines ersten Randes der klemmenbasierten einschubseitigen Abdeckung angeordnet sind, und einen zweiten Satz von Endplatten-zu-Fach-Klemmanordnungen, die eines ersten Randes der klemmenbasierten einschubseitigen Abdeckung angeordnet sind, wobei die erste und zweite Ränder gegenüberliegende Kanten der klemmenbasierten einschubseitigen Abdeckung sind.

## Revendications

1. Un agencement de module de batterie configuré pour un déploiement par rapport à un compartiment de module de batterie dans une zone de montage de module de batterie d'un système de stockage d'énergie, comprenant :
un module de batterie (400) configuré pour être inséré dans et/ou retiré d'un espace intérieur du compartiment de module de batterie via un côté d'insertion du compartiment de module de batterie ;
un couvercle de côté d'insertion basé sur une pince configuré pour être fermé sur le côté d'insertion du compartiment de module de batterie,
dans lequel le couvercle de côté d'insertion basé sur une pince comprend :
une plaque d'extrémité (405 ; 600B ; 600E) de module de batterie,
une section de compartiment (410) du compartiment de module de batterie, et
une pluralité d'agencements de serrage plaque d'extrémité-compartiment (425 ; 430 ; 435 ; 615 ; 500C) qui sont intégrés en tant que partie du couvercle de côté d'insertion basé sur une pince et sont configurés pour fixer le module de batterie à l'intérieur du compartiment de module de batterie en serrant la plaque d'extrémité sur la section de compartiment, **caractérisé en ce que** :
dans lequel chacune de la pluralité de d'agencements de serrage plaque d'extrémité-compartiment (425 ; 430 ; 435 ; 615 ; 500C) comprend une vis (505C ; 505D), une barre de serrage (500) et une section de plaque d'extrémité (600B ; 600E),
dans lequel la vis (505C ; 505D) est configurée pour être insérée à travers un trou (505) dans la barre de serrage (500) et dans un point de fixation sur la plaque d'extrémité (405 ; 600B ; 600E) qui fait qu'une pression de contact est appliquée par la barre de serrage (500) à la section de compartiment (410) dans une direction qui est différente d'une direction d'insertion de la vis (505C ; 505D) dans le trou.

2. Agencement de module de batterie selon la revendication 1,
dans lequel la barre de serrage dans chacune de la pluralité d'agencements de serrage plaque d'extrémité-compartiment (425 ; 430 ; 435 ; 615 ; 500C) comprend un ensemble de rainures, et
dans lequel chacune de la pluralité d'agencements de serrage plaque d'extrémité-compartiment (425 ; 430 ; 435 ; 615 ; 500C) comprend en outre une section pliée d'une section de compartiment.

3. Agencement de module de batterie selon la revendication 2, dans lequel la barre de serrage comprend une section bombée qui, en réponse au serrage de la vis, est configurée pour appliquer la pression de contact appliquée à la section de plaque d'extrémité qui serre la section de plaque d'extrémité sur une section de bride de la section de compartiment.

4. Agencement de module de batterie selon la revendication 3, dans lequel une forme d'une partie de la section de plaque d'extrémité qui entre en contact avec la section bombée de la barre de serrage est configurée pour réguler la pression de contact appliquée.

5. Agencement de module de batterie selon la revendication 4, dans lequel la forme est convexe, concave ou plate.

6. Agencement de module de batterie selon la revendication 3, comprenant en outre :
un composant d'étanchéité disposé entre la section de plaque d'extrémité et la section de bride,
dans lequel la pression de contact appliquée appuie sur le composant d'étanchéité pour sceller le compartiment de module de batterie.

7. Agencement de module de batterie selon la revendication 2, dans lequel, en réponse au serrage de la vis, le jeu de rainures entre en contact et se verrouille sur un bord d'un trou qui est défini dans la section pliée pour renforcer la barre de serrage contre tout mouvement vers l'arrière.

8. Agencement de module de batterie selon la revendication 2, dans lequel, en réponse au serrage de la vis, le jeu de rainures entre en contact et se verrouille sur un bord d'un composant de verrouillage de rainure qui est fixé à la section pliée pour renforcer la barre de serrage contre tout mouvement vers l'arrière.

9. Agencement de module de batterie selon la revendication 2,
dans lequel la barre de serrage est configurée comme une barre de serrage en forme de U, et
dans lequel le jeu de rainures comprend deux rainures qui sont disposées à des extrémités opposées d'une forme en U de la barre de serrage en forme de U.

10. Agencement de module de batterie selon la revendication 2, dans lequel la barre de serrage est construite à partir d'un matériau métallique qui subit une déformation ou une plastification pour augmenter l'élasticité afin d'assurer une force de serrage homogène.

11. Agencement de module de batterie selon la revendication 1, dans lequel la pluralité d'agencements de serrage de plaque d'extrémité-compartiment comprend un premier ensemble d'agencements de serrage de plaque d'extrémité-compartiment agencé le long d'un premier bord du couvercle de côté d'insertion basé sur une pince et un second ensemble d'agencements de serrage de plaque d'extrémité-compartiment agencé le long d'un second bord du couvercle de côté d'insertion basé sur une pince, les premier et second bords étant des bords opposés du couvercle de côté d'insertion basé sur une pince.
